# EUROPEAN PATENT APPLICATION

(11) **EP 4 807 583 A1**
(43) Date of publication of application: **16.09.2026**
(21) Application number: 25382241.5
(22) Date of filing: 14.03.2025
(51) Int. Cl.: G06F 16/583, G06F 16/55

(54) **SYSTEM AND COMPUTER-IMPLEMENTED METHOD OF DETECTING FAKE MULTIMODAL MEDIA**

(71) Applicant: Centre De Visió Per Computador, 08193 Cerdanyola del Vallès (ES); UNIVERSITAT AUTÒNOMA DE BARCELONA, 08193 Cerdanyola del Valles Barcelona (ES)
(72) Inventor: Valveny Llobet, Ernest, 08193 Bellaterra (Cerdanyola del Vallès) Barcelona (ES); Karatzas, Dimosthenis, 08193 Bellaterra (Cerdanyola del Vallès) Barcelona (ES); Dey, Arka Ujjal, 08193 Bellaterra (Cerdanyola del Vallès) Barcelona (ES); Llabrés Brustenga, Artemis, 08193 Bellaterra (Cerdanyola del Vallès) Barcelona (ES)
(74) Representative: Clarke, Modet y Cía., S.L.

(57) **Abstract**

System and computer-implemented method of detecting fake multimodal media. In the method (100), the original image (2) of a multimodal post (1) is represented with a set of original visual features (4) while the original caption text (3) is converted into an original entity relationship graph (5). The original image (2) is used through reverse search (108) to find evidence text (8), and the original caption text (3) is used through direct search (110) to find evidence image (9). The nodes and edges of the entity relationship graph (18) of evidence text (8) and the visual features (13) of evidence image (9) are matched against the original entity relationship graph (5) and the original visual features (4) to find supporting and conflicting evidence. The result of the matching is also used in a feedback-based image retrieval (112) to refine the retrieval of an updated evidence image (9'). Finally, an interpretable decision on the authenticity of the multimodal post (1) in terms of matched nodes, edges and visual features is obtained.

## Description

### FIELD

The present invention is comprised within the field of computer-implemented methods used to detect fake news and posts in social networks including a combination of image and text.

### BACKGROUND

The rise of disinformation on social media, especially through the strategic manipulation or repurposing of images, paired with provocative text, presents a complex challenge for traditional fact-checking methods.

Disinformation through social media posts can be characterized as retelling an existing story, albeit with an ulterior motive, usually with a visual aid. This form of multimodal disinformation can be particularly dangerous because images are a powerful tool for propaganda, often evoking deep emotions. The inclusion of images in social Media posts leads to increased engagement through likes and shares, thus amplifying the perceived credibility of the accompanying text, even when the content is false. This engagement and amplification accelerates the spread of disinformation for multimodal posts. The widespread availability of easy-to-use image manipulation tools exacerbates the issue, allowing users with little to no technical expertise to re-purpose or alter visuals. As a result, manipulated or out-of-context images have become a major driver of disinformation, making it increasingly difficult to discern fact from fiction in multimodal posts.

The kinds of manipulations typically seen in images include manipulation of the scene text (changing text on propaganda posters) and changing attributes of visual elements (making faces smile, or swapping faces). Often, the image used is real but has altered text. These text manipulations might use the visual cue to spread lies about an unrelated event or add or skip details from the text for a particular motive. There are multiple such ways to manipulate the original multimedia posts. By design, these multimedia posts are without editorial oversight and accessible to a vast population who otherwise may not have access to multiple information sources. This implies the need to fact-check these posts, determine whether the post is a fake or not, and clearly explain which parts of the posts are fake.

Manual fact-checking in traditional journalist approach involves conducting interviews, asking questions, cross-referencing multiple credible sources, and seeking out reliable evidence. This process is thorough, aiming not just to determine whether a piece of information is true or false, but also to identify which specific parts are accurate or misleading. Media houses or individual journalists take responsibility for the information they disseminate. But manual fact-checking is time-consuming, and thus in practice, fact-checking efforts have mostly focused on viral content, given its wide reach and potential impact. However, even then, the verification process often lags, allowing the viral content to cause damage before it can be corrected. Additionally, non-viral posts, which frequently go unchecked, can be equally or even more problematic as they continue to spread false narratives unverified.

Automated tools aimed at detecting such manipulations in isolation requires labeled datasets, which are scarce, leading to the development of tools to create synthetic datasets. Previous efforts at creating synthetic datasets focused on swapping captions or replacing entities and generating pseudo-fakes.

The method disclosed in [1] uses a language vision system to create synthetic fakes by mapping news clip images to semantically similar but unrelated (in reality) captions. The authors observed that machine-driven image re-purposing is now a realistic threat and provided samples that represent challenging instances of mismatch between text and image in news that can mislead humans.

This was followed up in [2], where further automated manipulations were introduced through complete swaps or slight attribute changes, creating a further realistic out-of-context dataset. The creation and accessibility of these tools for creation of synthetic datasets actually facilitate the large production of fake news. The fake image-text pairs thus generated are so convincing that they could no longer be judged in isolation but only through support from external knowledge, almost like how journalists fact-check news by looking for supporting or contesting evidence.

The method disclosed in [3] uses automatically web-scraped external evidence to detect out-of-context (OOC) usage of image-text. The authors introduce the idea of cross evidence to fact-check multimodal posts, where the image of the post is reverse searched to find text cross evidence, and text of the post is searched to find image cross evidence. This represents the core idea of finding cross evidence to support or reject multimodal posts. However, the underlying issues persisting are with the retrieval of relevant evidence, inherent bias in such supervised learning-based systems due to training data and the lack of explanation in the final judgment.

The style of the text of the multimodal post biases the results (evidence) it returns. When a story is retold subjectively in social media, it loses the style of the source (news website), affecting the retrieval of relevant evidence from direct searches. Further, because of the supervised learning-based setup, this detection of fake news is reduced to a binary classification problem (fake or verified), neglecting all intermediate stages and not being able to explain why the post is fake.

Supervised learning-based end-to-end fact-checking systems are susceptible to biases not just in the final decision but also in the upstream selection of evidence that leads to the decision. Also, multimedia posts often involve recent events on which systems trained on historical data are prone to fail. Finally, such detection in isolation tells us nothing about the provenance of the post image. Verifying the authenticity of such posts requires more than just a surface-level inspection; it necessitates cross-referencing with reliable sources and looking for supporting or contesting evidence. This approach is akin to journalistic fact-checking, where the goal is to substantiate the post by investigating its origins and corroborating details. Only through such diligent verification the spread of disinformation can be dealt with effectively.

The present invention relies on using external evidence and overcomes the main limitations of previous approaches, which can be summarized in the following points:
- Fact-checking relies on the retrieval of good evidence, which is often affected adversely by visual quality and text style of the multimedia post.
- Learning-based approaches need labeled datasets, which are difficult to obtain, and synthetic datasets often do not capture the distribution of actual fake news.
- Black box binary classification often renders the final output opaque. This is particularly relevant for fact-checking, where explaining why a multimedia post is fake is often as crucial as predicting the post as fake.

### References

[1] Luo, G. et al. "NewsCLIPpings: Automatic Generation of Out-of-Context Multimodal Media". Proceedings of the 2021 Conference on Empirical Methods in Natural Language Processing, pp. 6801-6817. Association for Computational Linguistics, Online and Punta Cana, Dominican Republic (Nov 2021).
[2] Shao, R. et al. "Detecting and grounding multi-modal media manipulation and beyond". IEEE Transactions on Pattern Analysis and Machine Intelligence (2024).
[3] Abdelnabi, S. et al. "Open-domain, content-based, multi-modal fact-checking of out-of-context images via online resources". Proceedings of the IEEE/CVF Conference on Computer Vision and Pattern Recognition, pp. 14940-14949 (2022).
[4] Wu, Y. et al. "Detectron2". https://github.com/facebookresearch/detectron2 (2019).
[5] He, K. et al. "Mask r-cnn". Proceedings of the IEEE international conference on computer vision, pp. 2961-2969 (2017).
[6] Aneja, S. et al. "Cosmos: Catching out-of-context misinformation with self-supervised learning". arXiv:2101.06278 (2021).
[7] Zhang, K. et al. "Joint face detection and alignment using multitask cascaded convolutional networks". IEEE signal processing letters 23(10), 1499-1503 (2016).
[8] Schroff, F. et al. "A unified embedding for face recognition and clustering". CVPR (2015).
[9] Zhou, B. et al. "Places: A 10 million image database for scene recognition". IEEE Transactions on Pattern Analysis and Machine Intelligence (2017).
[10] Dosovitskiy, A. et al. "An image is worth 16x16 words: Transformers for image recognition at scale". arXiv:2010.11929 (2020).
[11] Li, J. et al. "BLIP: Bootstrapping language-image pre-training for unified vision-language understanding and generation". Proceedings of the 39th International Conference on Machine Learning. Proceedings of Machine Learning Research, vol. 162, pp. 12888-12900. PMLR (17-23 Jul 2022).
[12] Devlin, J. et al. "Bert: Pre-training of deep bidirectional transformers for language understanding". NAACL-HLT (2019).
[13] Hagberg, A.A. et al. "Exploring network structure, dynamics, and function using network". Proceedings of the 7th Python in Science Conference, pp. 11 - 15. Pasadena, CA, USA (2008).
[14] Dey, A.U. et al. "Ektvqa: Generalized use of external knowledge to empower scene text in text-vqa". IEEE Access 10, 72092-72106 (2022).
[15] Papadopoulos, S.I. et al. "Reddot: Multimodal fact-checking via relevant evidence detection". arXiv:2311.09939 (2023).

### SUMMARY

The present invention refers to a system and a computer-implemented method of automatically detecting fake multimodal media without using any kind of supervision (i.e. a zero-shot approach) while maintaining a high accuracy rate.

A major advantage of the present invention is its ability to operate without labeled datasets or supervision, instead autonomously retrieving relevant evidence from news websites. This eliminates the biases typically associated with data-driven training methods. By dynamically sourcing evidence, the system remains highly adaptable to new and emerging events, overcoming the limitations of models trained on historical data, which often struggle to account for recent developments. By providing interpretable, unbiased, and contextually accurate results, the invention is a significant step towards combating misinformation in the digital age.

The method of detecting fake multimodal media comprises the following steps:
- Receiving a multimodal post including an original image and an original caption text.
- Extracting a plurality of original visual features from the original image.
- Generating an original entity relationship graph representing the original caption text and comprising a plurality of nodes and edges connecting the nodes, wherein the nodes are named entities detected in the original caption text by a large language model and the edges are the relationships between the corresponding named entities defined using the large language model.
- Applying a reverse search on the original image to retrieve evidence text.
- Applying a direct search with the original caption text to retrieve evidence image with associated caption text.
- Applying feedback-based image retrieval to improve upon the initial evidence image by iteratively retrieving more relevant evidence images, comprising the following steps:
   ∘ Generating an entity relationship graph of the associated caption text of the retrieved evidence image.
   ∘ Comparing the entity relationship graph with the original entity relationship graph to identify unmatched nodes.
   ∘ Extracting a plurality of visual features from the retrieved evidence image.
   ∘ Comparing the visual features of the retrieved evidence image with the original visual features to detect unmatched visual features.
   ∘ Obtaining an updated text search term using the unmatched nodes and the unmatched visual features.
   ∘ Applying a direct search with the updated text search term to retrieve updated evidence image with associated caption text.
- Comparing an evidence entity relationship graph representing the evidence text with the original entity relationship graph to detect matched nodes and matched edges.
- Comparing the visual features of the updated evidence image with the original visual features to detect matched visual features.
- Determining the authenticity of the multimodal post based on the matched nodes, matched edges and matched visual features.

Another aspect of the present invention refers to a system for detecting fake multimodal media. The system comprises a processor and a memory coupled with and readable by the processor and storing a set of instructions which, when executed by the processor, causes the processor to perform the method of detecting fake multimodal media.

The present invention also refers to a computer program product for detecting fake multimodal media, comprising computer code instructions that, when executed by a processor, causes the processor to perform the method of detecting fake multimodal media. The computer program product preferably comprises at least one non-transitory computer-readable storage medium (such as a USB pendrive, a hard drive, a CD-ROM, a DVD, a Blu-ray Disc) having recorded thereon the computer code instructions.

The multimodal post is presented in the format of a text-image pair. Given the multimodal post, the method is tasked with verifying its content with evidence. The method first retrieves external cross-evidence based on Internet searches. The retrieved evidence is then ranked based on similarity to identify the relevant evidence. The method uses fine-grained structured representation of the multimodal post and evidence, which allows to explicitly point out supports and conflicts while also being interpretable, and a zero-shot approach to detect said conflicts and supports is applied, instead of supervised learning which has an inherent bias towards the dataset it has been trained on with poor generalization (even when external knowledge is incorporated into the pipeline to add generalization, the choice of external knowledge is guided by the final supervision).

In the present method, the image of the multimodal post is represented with a set of visual features while the text is converted into an entity relationship graph. The image is used through reverse search to find cross-textual evidence, and the text is used to find cross-visual evidence. The graph-based representation of textual evidence and the visual representation of visual evidence are matched against the original text and image to find supporting and conflicting evidence. The result of the matching is also used to refine the retrieval of cross-visual evidence. Finally, an interpretable decision in terms of matched nodes, edges and visual features is obtained.

The zero-shot approach of the present method does not only perform a binary classification about authenticity, but also can highlight (using the matched nodes, matched edges and matched visual features) which parts of a social media post differ or agree with external evidence, aiding and enabling human users find relevant evidence and clearly pointing out the similarity and differences with the multimodal post.

The method represents the text and image in a way such that they can be easily compared through rule-based matching for support or conflict with evidence. The text is represented as an entity relationship (ER) graph, while pretrained vision systems are used to represent the image in terms of the objects, faces, places and scene text present in the image. With such structured representations, two texts or two images can be easily compared to check whether they are similar or not using rule-based matching; in addition, the method can explicitly state what they agree with and what they conflict about, leading to improved interpretability.

The zero-shot rule-based matching is an alternative to data-driven learning of fake versus real posts. This zero-shot approach with structured representation allows to place a social media post in the context of news articles clearly highlighting the supporting and conflicting elements, and, therefore, enriches the final decision with explainability.

To address the challenge of evidence retrieval resulting from variations in text style, such as verbosity or subjective retelling, the present invention employs a feedback-based retrieval method that utilizes entity relationship graphs to iteratively refine the search results.

The visual aid of the post usually consists of some existing image being repurposed or manipulated; thus, finding its real-world origin or provenance would unmask the truth. However, the danger of increasing realistic deepfakes means only credible sources should considered for the search. Given that the purpose is misuse, the most harmful choices of images for re-purposing are those that are already rich with visual information rather than generic or symbolic. These are also the kinds of images that are often credibly reported in news media. Thus, in the present method evidence is only sourced from news websites.

In summary, the main contributions of the present invention are:
- A structured representation of the text and image of the multimedia post in terms of LLM-aided entity relationship graphs and pretrained visual features that allow to do rule-based matching against data-driven learning for out-of-context detection.
- A multimodal feedback-based evidence retrieval guided by entity relationship graphs that iteratively improves search results by leveraging the structured representation and exploring unmatched nodes. This retrieval is aided by an LLM.
- A zero-shot verification and explanation scheme that applies strict matching rules to the structured representations of the multimedia post and evidence to generate interpretable results. Use of comparison metrics of entity relationship graph (graph match) and images (image match) leading to interpretable verification of multimodal posts with evidence in terms of supports and conflicts.

This novel zero-shot approach identifies and interprets multimodal disinformation, leveraging real-time evidence from credible sources and analyzing both the textual and visual components of social media posts in a structured, interpretable manner. By constructing a graph-based representation of entities and relationships within the post, combined with pretrained visual features, the method automatically retrieves and matches external evidence to identify inconsistencies. Unlike traditional black box models dependent on labeled datasets, the present method empowers users with transparency, illuminating exactly which aspects of the multimodal post hold up to scrutiny and which do not. The method does not require learning and achieves competitive performance with state-of-the-art methods, while offering enhanced explainability.

### BRIEF DESCRIPTION OF THE DRAWINGS

A series of drawings which aid in better understanding the invention and which are expressly related with an embodiment of said invention, presented as a non-limiting example thereof, are very briefly described below.
Figure 1 represents a flow diagram of a computer-implemented method of detecting fake multimodal media.
Figure 2 shows a multimodal post comprising an original image and an original caption text.
**Figure 3** represents the original visual features extracted from the original image of Figure 2 using a set of artificial neural networks.
Figure 4 represents the original entity relationship graph generated from the original caption text of Figure 2.
Figure 5 depicts the evidence text retrieved by applying a reverse search on the original image of Figure 2.
Figure 6 shows the evidence image and associated caption text retrieved by applying a direct search on the original caption text of Figure 2.
Figure 7 illustrates an entity relationship graph obtained from the caption text of the retrieved evidence image of Figure 6.
Figure 8 shows the unmatched nodes obtained by comparing the entity relationship graph of Figure 7 and the original entity relationship graph of Figure 4.
Figure 9 shows the unmatched visual features obtained by comparing the visual features of the retrieved evidence image of Figure 6 with the original visual features of Figure 3.

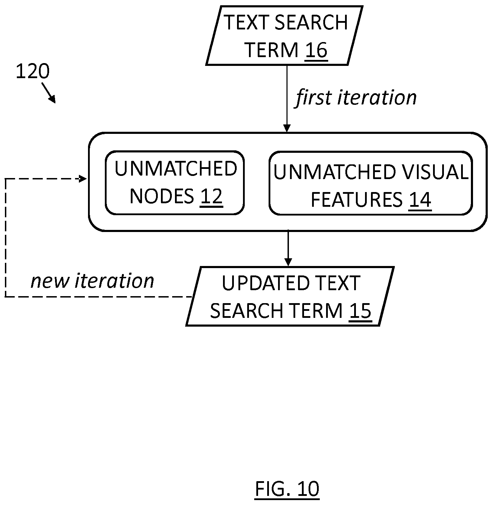

Figure 10 represents an updated text search term obtained using the unmatched nodes of Figure 8 and the unmatched visual features of Figure 9.
Figure 11 represents the step of applying a direct search on the updated text search term to retrieve an updated evidence image with an associated caption text.
Figure 12 depicts a feedback-base retrieval applied to a multimedia post.
Figure 13 depicts a feedback-base retrieval applied to another multimedia post.
Figure 14 shows the matched nodes and matched edges obtained by comparing an evidence entity relationship graph representing the evidence text of Figure 5 with the original entity relationship graph of Figure 4.
Figure 15 shows the matched visual features obtained by comparing the visual features of the updated evidence image of Figure 11 with the original visual features of Figure 3.
Figure 16 depicts a classifier used to determine the authenticity of the multimodal post by classifying the multimodal post as fake or genuine.
Figure 17 shows an example of fact-checking of a fake multimodal post in which a conflict in location nodes is detected.
Figure 18 shows a comparison of the results, in terms of accuracy of fake/genuine detection, of the present method with the state-of-the-art.
Figure 19 depicts a system for detecting fake multimodal media according to an embodiment.

### DETAILED DESCRIPTION

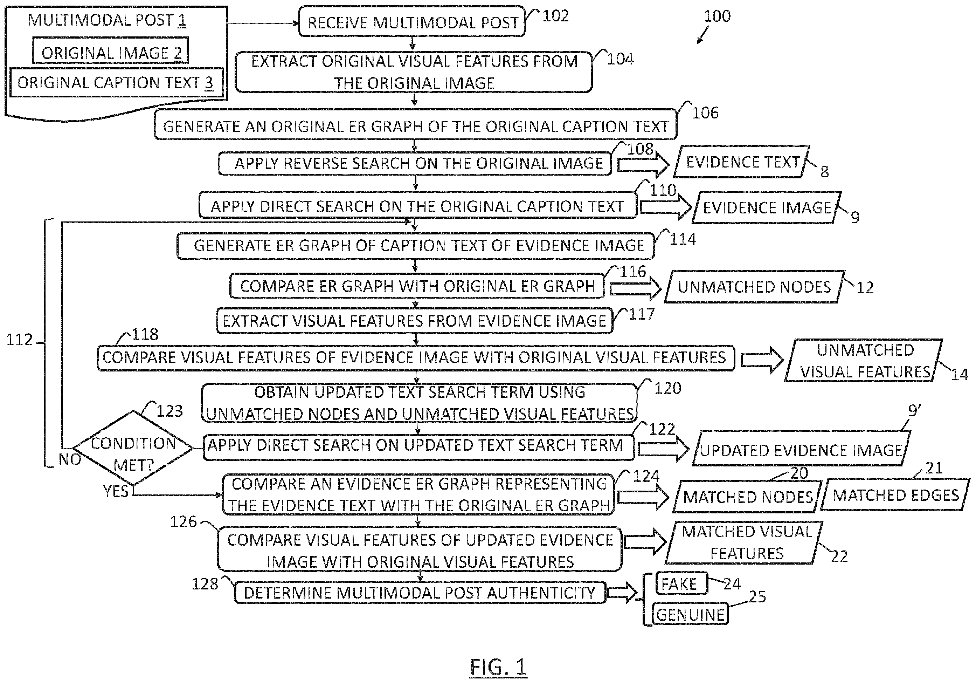

**Figure 1** is a flow diagram of a computer-implemented method 100 of detecting fake multimodal media according to an embodiment of the present invention.

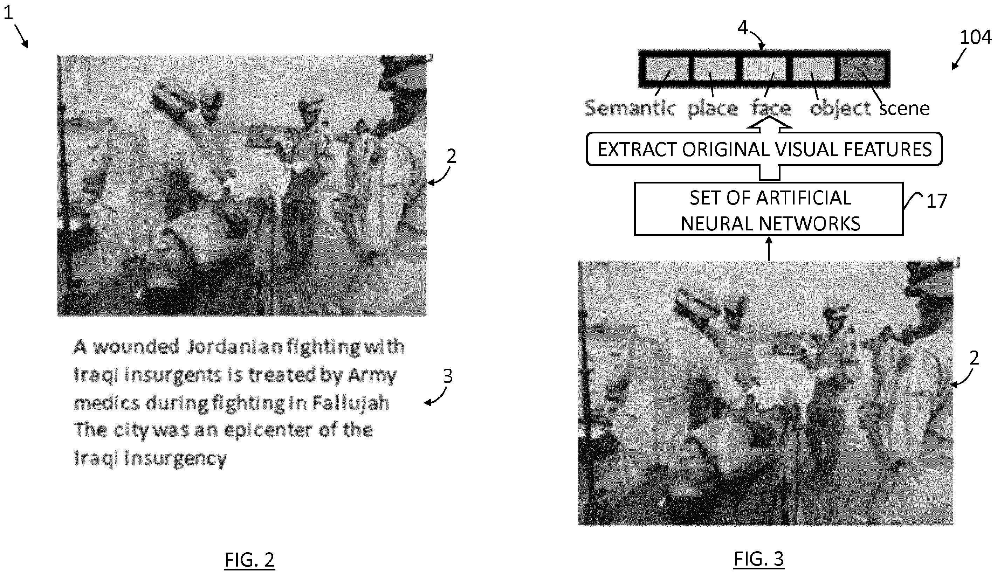

The method 100 comprises receiving 102 a multimodal post 1 including an original image 2 and an original caption text 3. **Figure 2** shows an example of multimodal post 1, wherein the original image 2 represents a wounded soldier and the original caption text 3 describes a wounded Jordanian soldier being treated by Army medics in Fallujah.

The images in a multimodal post 1 are usually rich in famous personalities and landmarks, in addition to generic objects. The text, on the other hand, usually discusses named entities. For images, the present invention relies on detecting objects, scene text, faces and places, in addition to a generic semantic representation of the image. For the text, a graph-based representation that links entities represented in the text is used.

The method 100 comprises extracting 104 a set of pretrained original visual features 4 from the original image 2. **Figure 3** represents the original visual features 4 extracted from the original image 2 of Figure 2. A visual representation of the original image 2 is obtained using a set of standard pretrained artificial neural networks, such as convolutional neural networks, to extract the relevant visual information of the image. In particular, the visual features extracted by the set of artificial neural networks 17 may include any combination of the following features:
- Objects: A pretrained detection model (such as the cascade region-based convolutional neural networks disclosed in [4]) is used to detect *Nₒ* object bounding boxes, which are then encoded through a pretrained Mask-RCNN Model [5]. Similar to Cosmos [6], the visual encoding may consist of RolAlign and average pooling to generate visual object embedding $\left\{{v}_{i}^{obj}\right\} ∈ {R}^{2048}$ (where *i* = 1,.., *Nₒ*)*.*
- Faces: News images are often rich in personality faces. A pretrained face detector (using for instance the cascaded convolutional neural networks disclosed in [7]) is used to detect *N_{f}* faces, which are encoded through a pretrained facing embeddings (e.g, [8]) to generate visual face embedding $\left\{{v}_{i}^{face}\right\} ∈ {R}^{512}$ (where *i* = 1,..,*N_{f}*).
- Places: Locations, or scene information is encoded through a pretrained artificial neural network (e.g., a convolutional neural network as described in [9]), trained on different types of places to define {*v^{place}*} ∈ 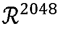 .
- Semantic: A pretrained artificial neural network (e.g., such as a vision transformer as disclosed in [10] or a convolutional neural network) is used to generate global image semantic features {*v^{sem}*} ∈ 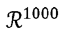 .
- Scene text: BLIP ([11]) is also used in a question answer mode to extract the scene text in the image from top left to bottom right, and then encoded through BERT ([12]), to form {*v^{sct}*} ∈ 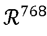 .

In an embodiment, the original visual features 4 are encoded in a vector *v* = $\left[{v}_{1 , 2 , … , {N}_{o}}^{obj}, {v}_{1 , 2 , … , {N}_{f}}^{face}, {v}^{place}, {v}^{sem}, {v}^{sct}\right]$*.* For instance, in the example depicted in Figure 3 the original visual features 4 include semantic features, place, faces, objects and scene text. In other embodiments, different combinations of visual features may be used.

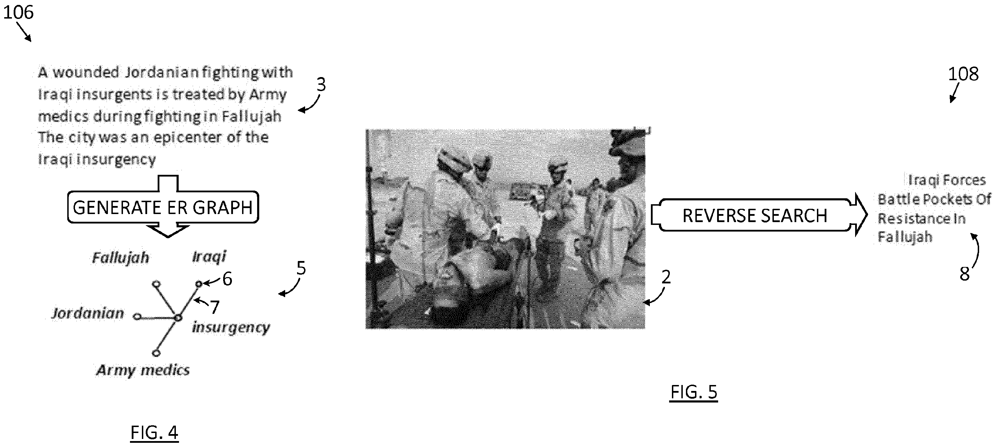

In the next step, the method 100 comprises generating 106 an original entity relationship (ER) graph 5 representing the original caption text 3, as shown in **Figure 4** for the original caption text 3 of Figure 2. The original entity relationship graph 5 comprises a plurality of nodes 6 and edges 7 that connect the nodes 6. The nodes 6 of the original entity relationship graph 5 are named entities ({"Jordanian", "Iraqi", "insurgency", "Army medics", "Fallujah"}) detected in the original caption text 3 by a large language model (LLM), and the edges 7 of the original entity relationship graph 5 connecting the nodes 6 are the relationships between the corresponding named entities defined using the large language model.

The plain text of a post is therefore represented in a structured way in terms of the named entities and actions or relationships connecting them. Comparing texts in terms of these graphs leads to a more fine-grained understanding of where the individual texts agree or conflict. A large language model (such as Mistral, Orca, LLaVA, GPT-3.5 Turbo) is used to create the ER graph from plain text input. The use of LLMs is guided by detailed prompts, examples, and checks to ensure that a proper graph representation is obtained. The LLM is given specific instructions and examples about entity detection and relationship identification focusing on news stories, and a particular format that can be easily interpreted as a networkx graph [13] is employed. This allows to automatically check graph properties (connectivity, degree of nodes, walk, path) leveraging the networkx library. This is combined with formatting checks and violations of the LLM instructions to reject responses that are deemed unfit. The nodes 6 and edges 7 are defined as:
- Nodes 6: The named entities detected in the text by the LLM form the nodes. The named entity nodes are preferably further enriched with facts from an external knowledge database. Similar to [14], a set of candidate knowledge facts are extracted for each node and the tweet text is used to select the most in-context candidate meaning according to semantic similarity. Thus, the node representation consists of details about the type of entity and a contextually relevant description. Location and date entities are encoded in a specific hierarchical fashion, namely (city, state, country) and (day, date, month, and year), respectively, enabling exact correspondence and, thus, easy comparison.
- Edges 7: The edges connecting two named entities are defined using the LLM with an explicit extractive action and abstractive description. The action terms are restricted from being directly from the text, whereas their description is generated based on the LLM's knowledge about the action. This abstractive description allows to map similar actions based on the description, like 'protest' to 'demonstration.' Therefore, the edges 7 preferably include an action term obtained directly from the caption text and a description generated using LLM knowledge about the action.

The method 100 further comprises applying a reverse search 108 on the original image 2 to retrieve evidence text 8. For instance, in the example depicted in **Figure 5** Google Reverse Search (other reverse search tools may be used) is applied on the original image 2 to find the following evidence text 8: "Iraqi Forces Battle Pockets Of Resistance In Fallujah". This evidence text 8 allows to find the context in which the original image 2 has been used in. This reverse search works best for content that is already widely published and is not as effective when tested on user-posted images on social media. For the reverse searches Google Vision API may be used. Google returns "Complete" match result, "Partial" match result and also detected visual entities. In an embodiment, only the "Complete" matches are used (the partial matches and the visual entities are disregarded), which yields better results.

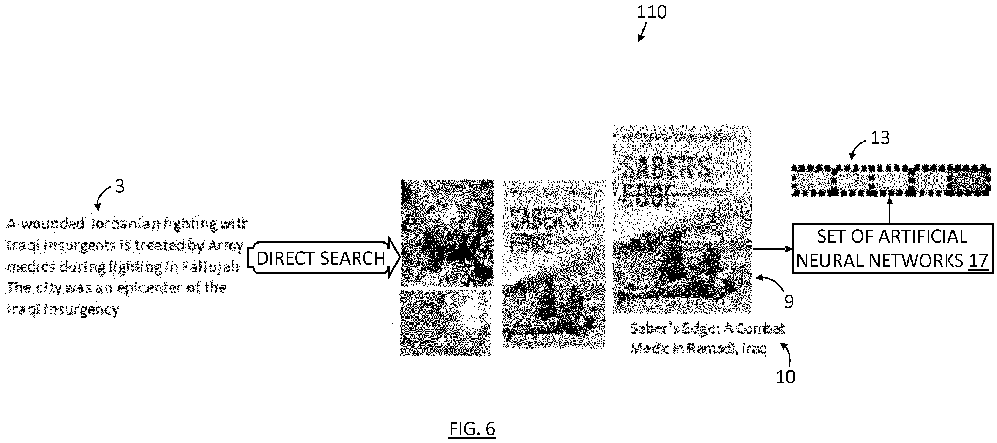

The method 100 also comprises applying a direct search 110 on the original caption text 3 to retrieve evidence image 9 with associated caption text 10 and visual features 13. In the example depicted in **Figure 6**, the Google powered Programmable Search Engine (other direct search engines may be employed) is queried with the original caption text 3 to collect one or more evidence images 9. When the original caption text 3 is brief and factual, the whole text can be used to query the Internet to find close matches. However, for real world fake news from social media posts retrieval of evidence image 9 may be a challenge due to the subjective retelling of the story in the original caption text 3 which is often different in style from the caption text reported in news websites. To obtain better results for verbose caption texts, it is required to summarize the text and create specific search terms, using the structured representation of the original caption text 3. However, the specific search terms that might work for an image depends on the annotation provided on the website. Thus, a feedback-based image retrieval 112 is adopted, using text and visual feedback from the retrieved evidence image 9 and its associated caption text 10 to guide and refine the search term generation.

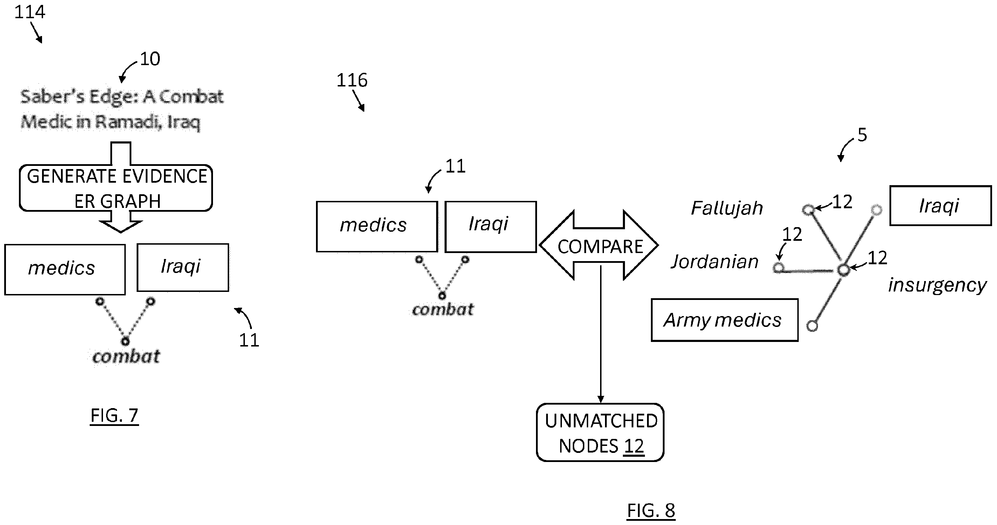

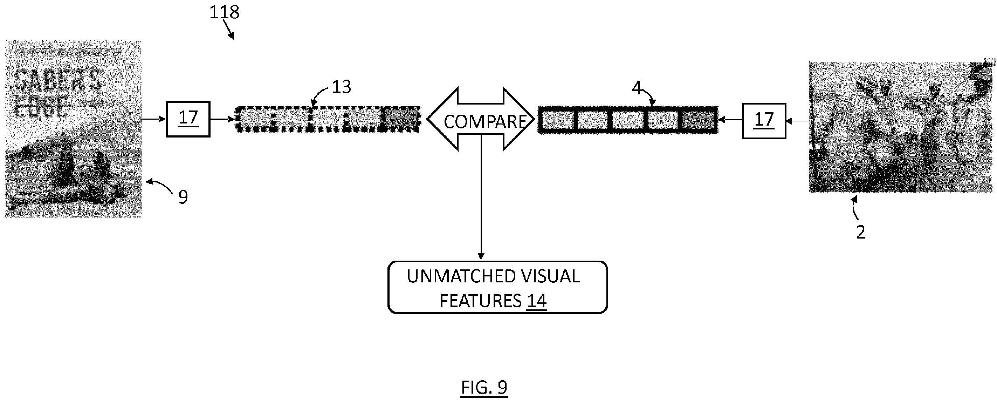

The feedback-based image retrieval 112 is applied on the evidence image 9 and comprises iteratively, until a predetermined condition 123 is met:
- Generating 114 an entity relationship graph 11 of the caption text 10 of the retrieved evidence image 9 (**Figure 7**).
- Comparing 116 the entity relationship graph 11 with the original entity relationship graph 5 to identify unmatched nodes 12 (**Figure 8**).
- Extracting 117 a set of visual features 13 from the retrieved evidence image 9.
- Comparing 118 the visual features 13 of the retrieved evidence image 9 with the original visual features 4 to detect unmatched visual features 14 (**Figure 9**).
- Obtaining 120 an updated text search term 15 using the unmatched nodes 12 and the unmatched visual features 14. In an embodiment, the unmatched visual features 14 are derived from five different pretrained vision systems that analyze:
   ∘ Human faces: Identifying whether faces in the query image and the retrieved evidence image match.
   ∘ Locations: Determining if the locations in both images are the same.
   ∘ Objects in the image: Checking for similar objects appearing in both images.
   ∘ General visual semantics: Comparing the overall scene context of both images.
   ∘ Scene text: Analyzing text embedded within images, particularly useful for events like protests with banners.

By comparing these visual features between the query image and the retrieved evidence image, areas of mismatch can be determined. While the primary basis for constructing the updated text search term 15 is the unmatched nodes 12 (entities) from the text query and the text elements of the retrieved evidence, there may be multiple unmatched nodes. To focus the search refinement process of the feedback-based image retrieval 112, visual comparisons help guide the selection of relevant entities:
∘ If faces do not match, focus on mismatches in 'PERSON' entities to refine the PERSON-related aspect of the next search term.
∘ If locations do not match, focus on mismatches in 'LOCATION' entities to refine the LOCATION-related aspect of the next search term.
∘ If objects do not match, focus on mismatches in 'EVENT' and 'PRODUCT' entities to refine those aspects of the next search term.
∘ If general visual semantics do not match, focus on mismatches in 'EVENT', 'PRODUCT', 'DATE', and 'TIME' entities to refine those aspects of the next search term.
∘ If scene text does not match, focus on mismatches in 'EVENT', 'PRODUCT', 'DATE', and 'TIME' entities to refine the corresponding aspects of the next search term.

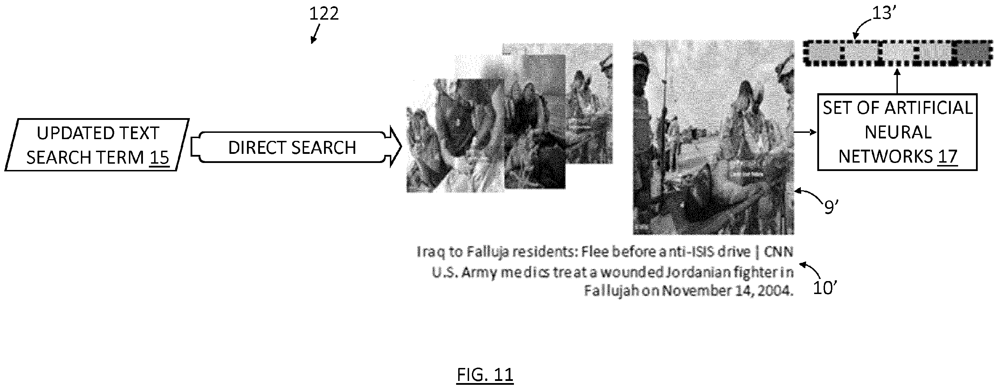

In a first iteration, shown in Figu**re 10**, the text search term 16 used for the direct search 110 applied on the original caption text 3, is updated based on the unmatched nodes 12 and the unmatched visual features 14, thus obtaining an updated text search term 15. For subsequent iterations, depicted in dashed lines, the updated text search term 15 obtained in the previous iteration is further modified to obtain an updated text search term 15 for the new iteration, using the unmatched nodes 12 and the unmatched visual features 14 of the new iteration.
- Applying a direct search 122 on the updated text search term 15 to retrieve updated evidence image 9' with associated caption text 10' and visual features 13' (**Figure 11**). The retrieved evidence image and the caption text considered for the next iteration will be this updated evidence image 9' and its associated caption text 10'.

The feedback-based image retrieval scheme leverages the structured representation of the query text to guide the search, enhancing initial retrievals by identifying unmatched nodes and adjusting the search query accordingly. Pretrained visual networks are employed to score the similarities between the original image 2 and the retrieved evidence image (9, 9'), forming visual feedback. This is combined with text feedback from comparing the graph representations of the original caption text 3 and the contextual text (caption text 10, 10') scraped alongside the retrieved evidence image (9, 9'). This combined visual and text feedback is used to propose a modified search term. In an embodiment, visual similarity scores for objects, semantics, place, face, and scene text are obtained, which are communicated to the large language model to refine the search string based on named entities related to semantics, place, and person from the graph. Public events that are well covered in news media lead to correct evidence retrieval and verification. Different news sources may be used for retrieving evidence images (9, 9'), such as nytimes.com, washingtonpost.com, bbc.com, cnn.com, dailymail.co.uk, etc.

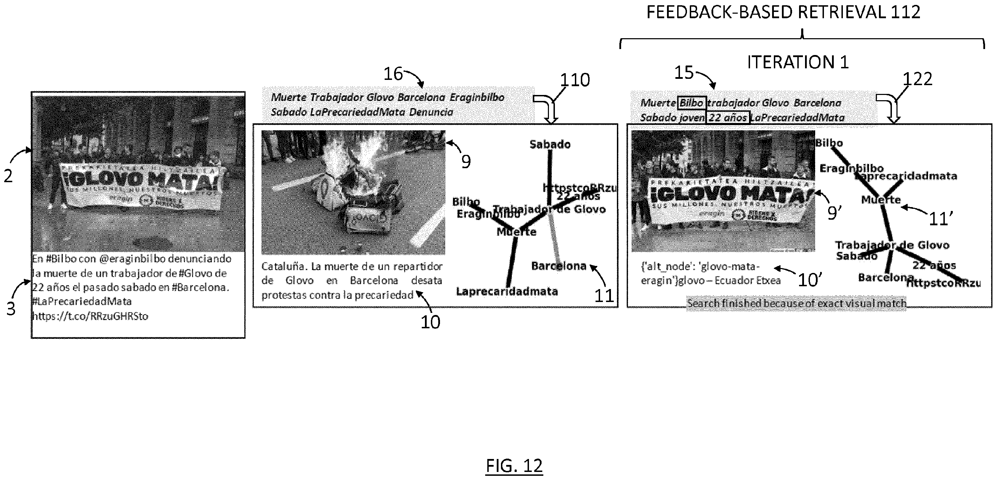

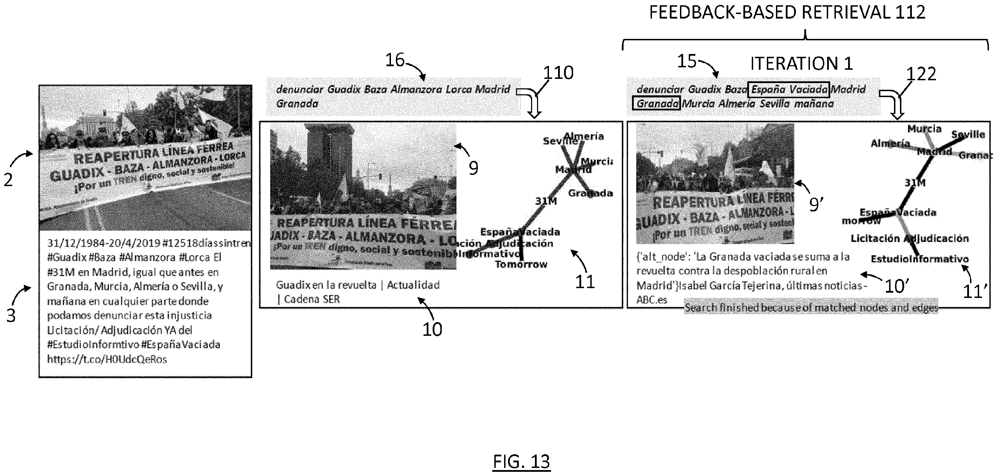

The iterations of the feedback-based image retrieval 112 enhance the initial retrievals of evidence images 9. The iterations are performed until a predetermined condition 123 is fulfilled (e.g., when the result of the next iteration does not provide any additional improvement, when there is an exact visual match, or when a certain number of iterations is reached). For instance, in the example of **Figure 12** the text search term 16 for the direct search 110 applied on the original caption text 3 to retrieve an evidence image 9 and associated caption text 10 is "Muerte Trabajador Glovo Barcelona Eraginbilbo Sabado LaPrecariedadMata Denuncia". In this example the text search term 16 includes some of the terms present in the original caption text 3, although a different number of terms may be used (e.g., the whole original caption text 3, as shown in Figure 6). In a first iteration of the feedback-based image retrieval 112, the text search term 16 is modified to include some unmatched nodes 12 (in particular, "Bilbo" and "22 años"), obtaining an updated text search term 15. The direct search 122 applied on the updated text search term 15 retrieves an updated evidence image 9' which is identical to the original image 2. The search is finished in this first iteration since there is an exact visual match. In the example of **Figure 13****,** the search is finished after the first iteration due to the matched nodes and edges of the entity relationship graph 11' of the caption text 10' of the updated evidence image 9' when compared to the original entity relationship graph 5.

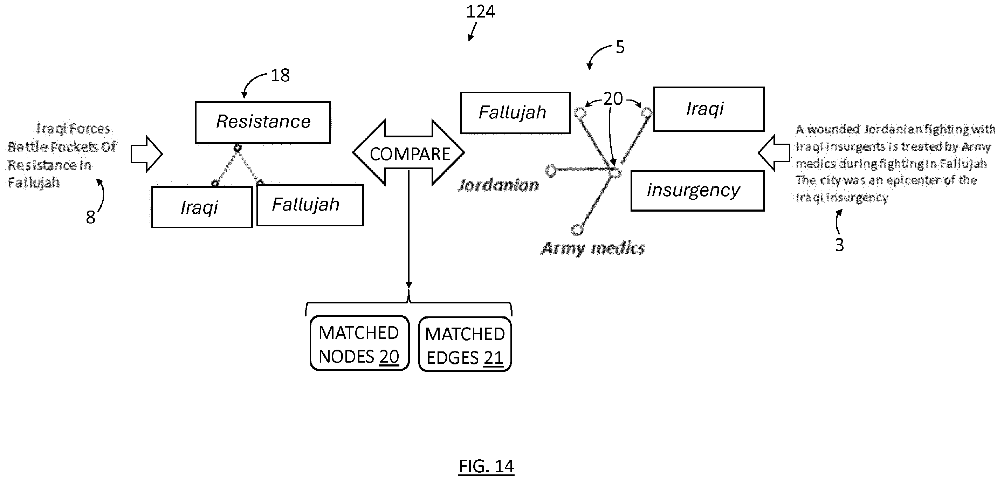

Back to Figure 1, the method 100 also comprises comparing the retrieved evidence text 8 and updated evidence image 9' with the original caption text 3 and the original image 2, respectively. In particular, the method 100 comprises comparing 124 an evidence entity relationship graph 18 representing the evidence text 8 with the original entity relationship graph 5 to detect matched nodes 20 and matched edges 21 (**Figure 14**). The texts retrieved from evidences (evidence texts 8) to be compared with the original caption text 3 are often widely different in their coverage of an event. While the original caption text 3 may be a 280-character Twitter post, the web-scraped evidence text 8 may be a few paragraphs. The graphs natively formed from varying lengths of text can have very different topologies, rendering them hard to compare. To address this, evidence text 8 is represented focusing on the entities and relationships found in the original caption text 3. The LLM is prompted to focus on the entities in the evidence text 8 that are also present in the ER graph of the original caption text 3 (i.e. original entity relationship graph 5) and steer the detection around them. For relationship construction, the method defines edges in the evidence entity relationship graph 18 by taking edges from the original entity relationship graph 5, but only when both participating entities are also present in the evidence entity relationship graph 18. The action details of these edges are then masked, and the LLM is tasked with predicting the actions based solely on the evidence text. This implies the evidence entity relationship graph 18 representing the evidence text 8 is forced to have an edge between nodes if such nodes are also present in the original entity relationship graph 5 and connected by an edge, thereby enforcing a similar graph topology.

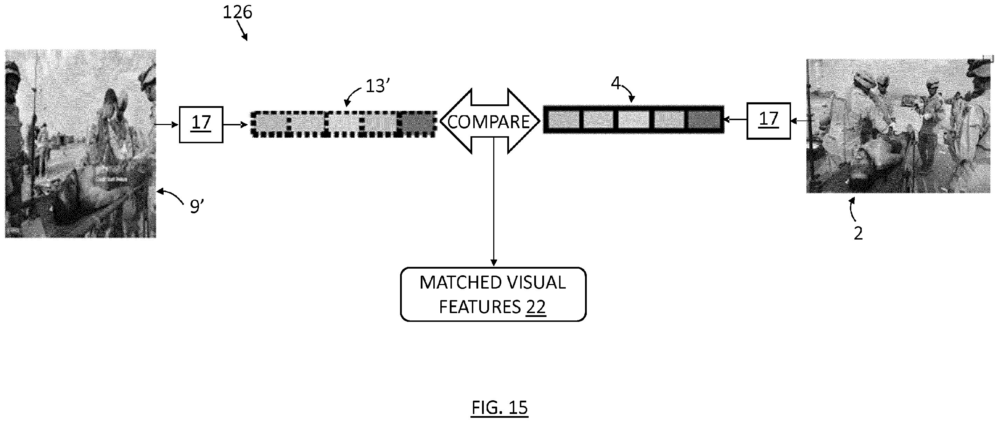

The method 100 further comprises comparing 126 the visual features 13' of the updated evidence image 9', retrieved once the feedback-based image retrieval 112 has finished, with the original visual features 4 to detect matched visual features 22 (Figure 15).

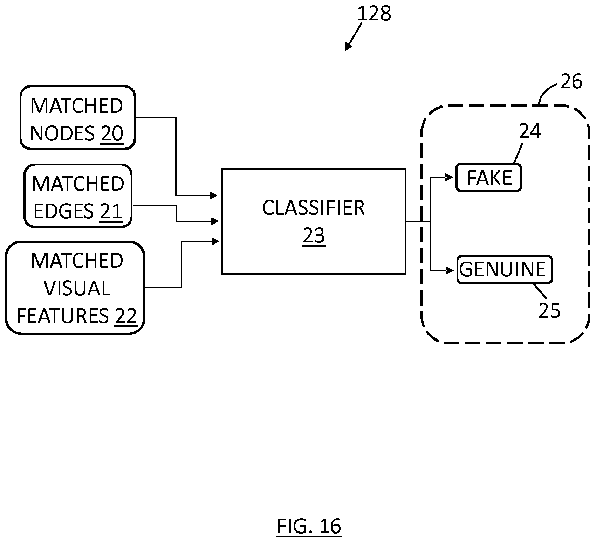

Finally, the method 100 determines 128 the authenticity of the multimodal post based on the matched nodes 20, matched edges 21 and matched visual features 22. According to the embodiment depicted in **Figure 16****,** a classifier 23 determines the authenticity 26 of the multimodal post by classifying the multimodal post 1 as fake 24 or genuine 25, depending on the matched nodes 20, matched edges 21 and matched visual features 22, taking into account the classifier configuration. This configuration, which primarily consists of various thresholds, are set based on a validation set. With regard to the matched nodes 20, the classifier 23 may also take into account conflicts in nodes, especially in terms of location and date, as it will be later explained.

In the present invention, a multimodal post is interpreted as a collection of named entities that exist in the real world and a set of relationships or associations claimed by the multimodal post. While in the state-of-the-art the multimodal posts are judged in their entirety as fake or genuine, the present invention tries to find out which parts of the multimodal post are true, because there is evidence for it in the external world, and which parts cannot be verified or are contested.

Given an image-text multimodal post, the retrieved multimodal evidence is used to independently verify the textual and visual aspects of the multimodal post. The original image 2 and original caption text 3 are compared against the retrieved evidence. The multimodal verification involves checking for (i) image match by comparing the original image 2 and the updated evidence image 9' (Figure 15) and (ii) graph match by checking the original caption text 3 against the evidence text 8 (Figure 14).

Regarding the (i) image match, visual verification entails looking for exact matches from among the retrieved updated evidence image 9'. The images are measured in terms of their pretrained feature similarity, only accepting matches beyond high thresholds. The image match scheme checks for visual aspects that are specific to news items encoding the images in terms of semantics, places, objects, faces, and scene text. In particular, the semantic, place, face, object, and scene-text features of the original image 2 and updated evidence image 9' are scored, in terms of the cosine distance of their embeddings. The matched visual features 22 are those that are similar beyond an image similarity threshold (e.g., of 0.9). In an embodiment, if a predetermined number (e.g., three) of the total scores (e.g., five scores) are similar beyond the image similarity threshold, the images (2, 9') are considered as matched. This allows to explicitly point out how the updated evidence image 9' matches or contests the original image 2.

In an embodiment, each one of the original visual features 4 is encoded in a first vector and each one of the visual features 13' of the updated evidence image 9' is encoded in a corresponding second vector. For instance, for the semantic features a first vector ${v}_{1}^{sem}$ and a second vector ${v}_{2}^{sem}$ are respectively obtained. The matched visual features 22 are detected based on the cosine similarity (e.g., cosine distance) between said corresponding first ${v}_{1}^{sem}$ and second ${v}_{2}^{sem}$ vectors. A cosine similarity score is obtained for each one of the visual features (objects, faces, places, etc.), and the score is compared with an image similarity threshold (e.g., 0.9). If the score is greater than the threshold, the corresponding visual feature is considered as matched.

With regard to the (ii) graph match, the truthfulness of an original caption text 3 is measured by comparing the ER graphs from the original caption text 3 and evidence text 8 (original entity relationship graph 5 and evidence entity relationship graph 18, respectively), in terms of entity/node matching and edge matching. It is assumed that for a genuine multimodal post every edge in the original entity relationship graph 5 must have a corresponding edge or walk in the evidence entity relationship graph 18. This can be checked through:
- Entity matching: Mapping nodes 6 to check if similar nodes exist in the evidence entity relationship graph 18. Same entities may be represented slightly differently across texts, and thus, instead of an exact name-matching-based correspondence, the node details specific to the entity are taken into account. The prompting scheme enforces such details in an entity type-specific predefined format. Thus, the nodes are encoded in terms of their name and description using pretrained word embeddings. The node correspondence is solved as a linear assignment problem through a modified Hungarian algorithm. The cosine distance between the node embeddings is used to define the cost matrix for the Hungarian. For a given node, its cost related to the nodes of the same ER graph is masked, forcing it to be mapped to nodes of the other ER graph.
- Conflicts in nodes: Checking if the mapped nodes have any conflict in terms of location and date. While news articles may talk about similar people and events, their contextual details in terms of location and date distinguish them. Thus, in this step, it is checked whether the nodes mapped in the previous stage are consistent in terms of the location and date type entities in their neighborhood. The hierarchical nature of formatting allows for the dealing of missing values in terms of city or state name or month. A pair of matched nodes is deemed consistent in terms of location when they share the same location type entity in their neighborhood. A conflict is raised when the nodes have different location-type entities. A similar logic is applied when checking dates. Any inconsistency in this stage leads to rejection of the mapping.
- Edge matching: Checking if edges in the original entity relationship graph 5 are connected by a semantically similar edge or walk in the evidence entity relationship graph 18. For a given edge (*a*, *b*, '<action>') in the original entity relationship graph 5, it is checked whether the corresponding nodes *a* and *b* in the evidence entity relationship graph 18, found using Hungarian in the previous stage, are connected by a walk. However, the presence of a walk is not enough, as this walk could be contesting (disagreeing with) or verifying (agreeing with) the original entity relationship graph 5. Thus, the semantic similarity of this walk on the evidence entity relationship graph 18 is checked against the edge in the original entity relationship graph 5. The '<action>' terms are collated along the walk and the cosine similarity is compared against the claim '<action>' in terms of BERT embeddings [12]. Thus, edges can be marked as 'unconnected' if the nodes are not connected in the evidence entity relationship graph 18 by semantically similar '<action>' terms. Otherwise, they can be marked as 'verified'. This fine-grained marking of edges allows to explicitly point out which parts of the original entity relationship graph 5 are verified. This edge-matching scheme allows to combine multiple evidence entity relationship graphs 18 and reason about the status of the edges in the original entity relationship graph 5 simultaneously. This fraction of verified edges is output as the measure of overall support for the original caption text 3 given the evidence text 8. This, of course, depends on the complexity and verbosity of the original caption text 3 and the available evidence.

In an embodiment of the present invention, one or more of the matched nodes 20, matched edges 21 and matched visual features 22 are detected using similarity measures and similarity thresholds. In an embodiment, one or more of the following parameters and thresholds may be used to determine the authenticity 26 of the multimodal post 1:
- An entity or node similarity threshold is used to reject mapping during entity matching using Hungarian. This value is preferably set to 0.8, making sure only nodes that match beyond this threshold with their name and description field in terms of Bert Similarity.
- An action or edge similarity threshold is used to reject connected edges or walks in the evidence entity relationship graph 18 during edge matching. This value is preferably set to 0.5, making sure only edges or walks that match beyond this threshold with their action field in terms of Bert Similarity. Edge threshold is only applied to connected edges or walks.
- An image similarity threshold is preferably set to 0.9 for all types of image features (sematic, face, place, object, scene-text). If any three of these five features pass the threshold, the images are considered visually matched.
- An edge support threshold is the minimum fraction of supported edges for graph match. In an embodiment, the edge support threshold is set to 0.3.
- A graph conflict threshold is set to the number of conflicts that are tolerated. In an embodiment, this threshold is set to zero (no conflict is tolerated).

In an embodiment, the classifier 23 determines the authenticity 26 of the multimodal post 1 (fake 24 or genuine 25) according to these parameters and thresholds. For instance, when comparing ER graphs if one or more conflicts in location-type or date-type nodes are detected (e.g. using Bert Similarity and an entity similarity threshold), the multimodal post 1 is considered a fake 24. Likewise, if the ratio of matched edges 21 (which in an embodiment are determined based on Bert similarity and an action similarity threshold) is lower than the edge support threshold (e.g. 0.3), the multimodal post 1 is also classified as a fake 24. If fewer than a predetermined number (e.g. 3) of the compared visual features pass the image similarity threshold (e.g. 0.9), the images are not considered visually matched and the multimodal post 1 is classified as a fake 24. Different combinations of the conditions that these parameters and thresholds must fulfil may be considered by the classifier 23 when determining the authenticity 26 of the multimodal post 1.

The multimedia post 1 is classified as genuine 25 when there is supporting evidence, that is, when the multimedia post 1 can be validated with external knowledge in news websites. The multimedia post 1 is classified as fake 24 due to lack of any evidence of it in news websites or if the evidence conflicts with some specific detail. The validation as genuine and the fake detection is performed using the matched nodes 20 (and conflict in nodes), the matched edges 21 and the matched visual features 22.

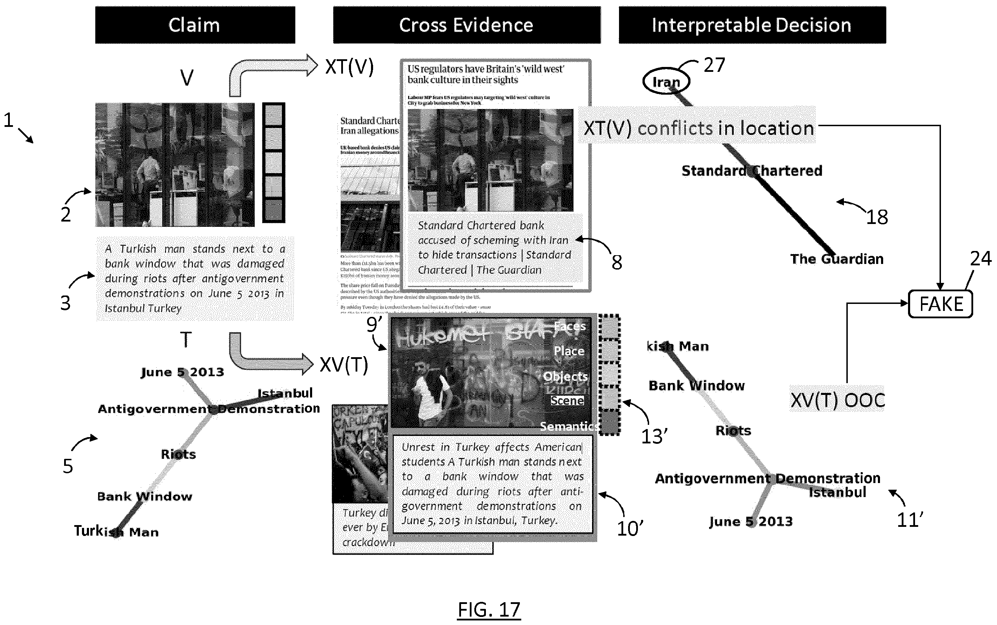

**Figure 17** shows an example of fact-checking of a social media claim (multimodal post 1) using the method 100 of the present invention, wherein the original image 2 (V) of the claim has been used out-of-context. XV(T) is the visual cross-evidence (updated evidence image 9' with associated caption text 10') from the original caption text 3 (T), and XT(V) is the text cross-evidence (evidence text 8) from the original image 2 (V). The original entity relationship graph 5 of the original caption text 3 (T) shows that 'riots' and 'June 5 2013', among others, are supported by the XV(T) through similarly colored nodes and edges in a graph-based text representation (entity relationship graph 11') of the caption text 10'.

However, the retrieved image (updated evidence image 9') is not visually similar to the original one (V), and thus, this is judged as Out-of-Context (OOC), the multimodal post 1 being classified by the classifier 23 as a fake 24. Furthermore, the graph-based text representation of XT(V) (evidence entity relationship graph 18) does not support the original caption text 3 (T) in terms of matched nodes or edges but instead conflicts regarding the location context ('Turkey' vs. 'Iran'), which also contributes to the classification as a fake 24.

As shown in the example of Figure 17, the nodes 6 preferably include location and/or date entities, and comparing 124 the evidence entity relationship graph 18 with the original entity relationship graph 5 comprises finding conflicts 27 in the nodes 6 in terms of location and date. These conflicts 27 in location and date are also used by the classifier 23 to detect the multimodal post 1 as fake or genuine.

The method 100 may also further comprise outputting information regarding the matched nodes 20, matched edges 21 and matched visual features 22 that support the determination of the authenticity 26 of the multimodal post 1. This leads to generate an interpretable decision in terms of matched nodes, edges and visual features, allowing to explicitly point out supports and conflicts for the decision, and not just providing a mere binary classification (fake/genuine) devoid of support for the decision. For instance, in the example of Figure 17 the ER graph comparison can clearly point out the unverified or falsified parts of the multimodal post 1 in the output (in this case, the conflict 'Turkey' vs. 'Iran').

The results of the method 100 of the present invention are hereinafter compared with state-of-the-art methods, wherein multimodal posts 1 (in particular, social media posts) are fact-check using relevant evidence from news articles. This involves retrieving evidence and verifying it through comparisons with the multimodal post 1. The effectiveness of the method 100 depends on retrieving relevant evidence to make meaningful verification, an automated verification being then performed by comparing the multimodal post 1 with the retrieved evidence.

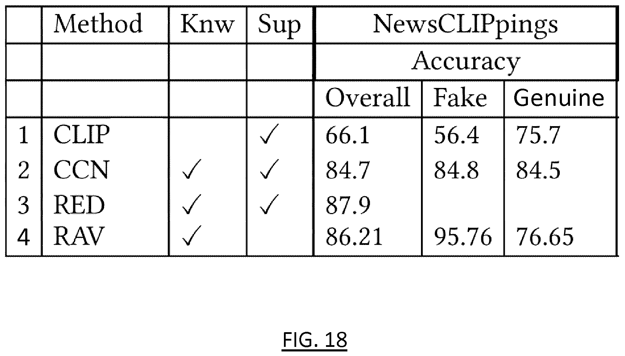

The table of **Figure 18** shows a comparison of the results on the binary task (fake or genuine) of disinformation detection with the state-of-the-art using a dataset 'NewsCLIPpings'. The method of the present invention, "RAV" (Retrieval Augmented Verification), shows good results without any supervision, doing better than others in rejecting fake news. 'Knw' refers to methods that use knowledge or evidence and 'Sup' refers to methods that use any kind of supervision.

The state-of-the-art methods are:
- CLIP [1]: does not use any evidence but passes image and text through separate encoders to learn a binary classification task.
- CCN [3]: proposes the use of cross evidences to learn a binary classification task.
- RED [15]: highlights the need to point to relevant evidence, creating a dataset of relevant evidence based on cosine similarity with the multimodal post and training a binary classification task of fake or not that leverages this idea of relevance. This allows to point to the evidence that led to the decision, but the method cannot process the evidence in a fine-grained manner to say which parts of the evidence led to the decision.

The results shown in Figure 18 validate that, in terms of overall accuracy on the task of detecting fakes versus genuine, the present method is comparable with the supervised evidence-based fact-checking state-of-the-art methods (CNN and RED), but further providing a zero-shot approach without any kind of supervision with high accuracy in rejecting fakes.

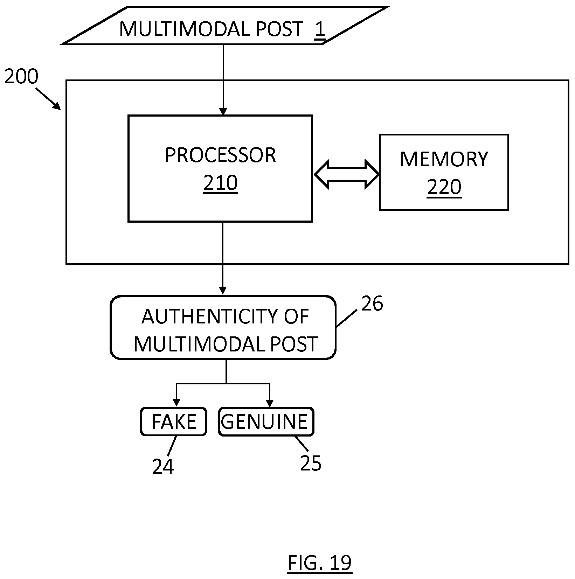

The present invention also refers to a system for detecting fake multimodal media. As depicted in the embodiment of **Figure 19****,** the system 200 comprises a processor 210 and a memory 220 coupled with and readable by the processor 210 and storing a set of instructions which, when executed by the processor 210, causes the processor to perform the method 100 of detecting fake multimodal media previously described. In another embodiment, the system 200 comprises a plurality of processors 210 and one or more memories. The processor (or processors) and memory (or memories) may be implemented in one or more CPU, one or more GPU, or a combination thereof. The system 200 may be running, for instance, in a computer, a server, a laptop, a tablet, or a smartphone, among others.

## Claims

1. A computer-implemented method of detecting fake multimodal media, comprising:
receiving (102) a multimodal post (1) including an original image (2) and an original caption text (3);
extracting (104) a plurality of original visual features (4) from the original image (2);
generating (106) an original entity relationship graph (5) representing the original caption text (3) and comprising a plurality of nodes (6) and edges (7) connecting the nodes (6), wherein the nodes (6) are named entities detected in the original caption text (3) by a large language model and the edges (7) are the relationships between the corresponding named entities defined using the large language model;
applying a reverse search (108) on the original image (2) to retrieve evidence text (8);
applying a direct search (110) with the original caption text (3) to retrieve evidence image (9) with associated caption text (10);
applying feedback-based image retrieval (112) on the evidence image (9), the feedback-based image retrieval (112) comprising iteratively:
- generating (114) an entity relationship graph (11, 11') of the caption text (10, 10') of the retrieved evidence image (9, 9');
- comparing (116) the entity relationship graph (11, 11') with the original entity relationship graph (5) to identify unmatched nodes (12);
- extracting (117) a plurality of visual features (13, 13') from the retrieved evidence image (9, 9');
- comparing (118) the visual features (13, 13') of the retrieved evidence image (9, 9') with the original visual features (4) to detect unmatched visual features (14);
- obtaining (120) an updated text search term (15) using the unmatched nodes (12) and the unmatched visual features (14); and
- applying a direct search (122) with the updated text search term (15) to retrieve updated evidence image (9') with associated caption text (10');
comparing (124) an evidence entity relationship graph (18) representing the evidence text (8) with the original entity relationship graph (5) to detect matched nodes (20) and matched edges (21);
comparing (126) the visual features (13') of the updated evidence image (9') with the original visual features (4) to detect matched visual features (22); and
determining (128) the authenticity (26) of the multimodal post (1) based on the matched nodes (20), matched edges (21) and matched visual features (22).

2. The computer-implemented method of claim 1, wherein the original visual features (4) and the visual features (13, 13') are extracted (104, 117) by a set of artificial neural networks (17).

3. The computer-implemented method of any preceding claim, wherein the visual features (4, 13, 13') include objects, faces, places, semantic features, a scene text, or a combination thereof.

4. The computer-implemented method of any preceding claim, wherein each original visual feature (4) is encoded in a first vector and each visual feature (13') of the updated evidence image (9') is encoded in a second vector, and wherein the matched visual features (22) are detected based on the cosine similarity between corresponding first and second vectors.

5. The computer-implemented method of any preceding claim, wherein the authenticity (26) of the multimodal post is determined (128) by a classifier (23) configured to classify the multimodal post (1) as fake (24) or genuine (25), depending on the matched nodes (20), matched edges (21) and matched visual features (22).

6. The computer-implemented method of any preceding claim, wherein the nodes (6) include location and date entities, and wherein comparing (124) the evidence entity relationship graph (18) with the original entity relationship graph (5) comprises finding conflicts in the nodes (6) in terms of location and date.

7. The computer-implemented method of any preceding claim, further comprising outputting information regarding the matched nodes (20), matched edges (21) and matched visual features (22) that support the determination of the authenticity (26) of the multimodal post (1).

8. The computer-implemented method of any preceding claim, wherein the matched nodes (22), matched edges (21) and matched visual features (22) are detected using similarity measures and similarity thresholds.

9. A system for detecting fake multimodal media, the system comprising a processor (210) and a memory (220) coupled with and readable by the processor (210) and storing a set of instructions which, when executed by the processor (210), causes the processor to perform the method (100) of any of claims 1 to 8.

10. A computer program product for detecting fake multimodal media, comprising computer code instructions that, when executed by a processor (210), causes the processor to perform the method (100) of any of claims 1 to 8.

11. The computer program product of claim 10, comprising at least one computer-readable storage medium having recorded thereon the computer code instructions.
